# EUROPEAN PATENT SPECIFICATION

(11) **EP 4 163 111 B1**
(45) Date of publication and mention of the grant of the patent: **02.09.2026**
(21) Application number: 22212178.2
(22) Date of filing: 23.01.2017
(51) Int. Cl.: B32B 27/32, B32B 3/26, B32B 15/08, B32B 15/085, B32B 27/06, B32B 27/08, C08K 3/26, C08L 23/06

(54) **BI-ORIENTED, CAVITATED, LINEAR, LOW-DENSITY FILM WITH GOOD SEALING PROPERTIES**
BIORIENTIERTER, KAVITIERTER, LINEARER FILM MIT NIEDRIGER DICHTE UND GUTEN SIEGELEIGENSCHAFTEN
FILM BASSE DENSITE LINEAIRE, A CAVITES, BIORIENTE, PRESENTANT DE BONNES PROPRIETES D'ETANCHEITE

(30) Priority: 21.01.2016 US 201662281567 P
(43) Date of publication of application: 12.04.2023
(62) Document number(s) of the earlier application(s) in accordance with Art. 76 EPC: 17742107.0 / 3 405 344
(73) Proprietor: Jindal Innovation Center SRL, 6761 Virton (BE)
(72) Inventor: Ambroise, Benoit, 6717 Nobressart (BE)
(74) Representative: Barker Brettell LLP

(56) References cited:
- WO-A1-2010/047905
- WO-A1-2017/087809
- WO-A1-2017/120340

## Description

### FIELD

This disclosure relates to bi-oriented, linear, low-density films having good sealing properties.

### BACKGROUND

Cast or blown unoriented polyethylene ("PE") or polypropylene ("PP") films are used as sealants in packaging or other applications, and may be combined with other webs, which are printed, like paper, polyethylene terephthalate) ("PET"), biaxially oriented PP ("BOPP"), metallized PET or BOPP, Nylon^{®}, or aluminum foil in order to provide the film with rigidity and barrier protection,

Sealant webs, such as those just described, are often white-pigmented in order to provide a bright white base for printed colors thereon. Use of white-sealant webs saves on the high cost of printing white ink.

Solid particles or incompatible polymer(s) in a PP film may undergo orientation in order to produce cavitated BOPP films. The orientation process enhances cavitation. A drawback of cavitation, however, is impairment of seal strength. WO2010047905 concerns multilayer shrink films.

### SUMMARY

The present invention provides biaxially oriented, multilayered films as defined in claim 1, and the use of the films, as defined in claim 8. Optional features are defined in the dependent claims. Further relevant subject matter that assists in the understanding of the invention as claimed is disclosed.

Disclosed are methods, compositions, structures, and uses for a biaxially oriented, multilayered film that include a core layer comprising linear, low-density polyethylene (LLDPE), such as metallocene, linear, low-density polyethylene (mLLDPE), wherein the core layer is flanked by a first skin layer and a second skin layer. This same type (*e.g.,* melting index, density, and/or melting peak) of LLDPE, such as mLLDPE, may be in the first skin layer and/or the second skin layer. The first skin layer is located on a first side of the core layer, and the second skin layer is located on a second of the core layer, wherein the first side is on an opposite side of the core layer as compared to the second side. In addition, the biaxially oriented, multilayered film has a sealing strength of at least 400 g/cm at 100°C under a pressure of 41 N/cm² at a dwell time of 0.75 s.

Described, in order to assist understanding of the invention, but not claimed, is a method for making the foregoing biaxially oriented, multilayered film. The method may include coextruding the core layer, the first skin layer and the second skin layer of the foregoing biaxially oriented, multilayered film, and then orienting the biaxially oriented, multilayered film, which has a sealing strength of at least 400 g/cm at 100 °C under a pressure of 41 N/cm² at a dwell time of 0.75 s.

In a described but unclaimed example, the biaxially oriented, multilayered film may include tie layer(s) intermediate to at least one of the skin layers and the core layer.

The present invention also provides use of the foregoing biaxially oriented, multilayered films, in a packaging, tagging, bagging, or labeling application.

### DETAILED DESCRIPTION

Below, directional terms, such as "above," "below," "upper," "lower," "front," "back," "top," "bottom," etc., are used for convenience in referring to the accompanying drawings. In general, "above," "upper," "upward," "top," and similar terms refer to a direction away the earth's surface, and "below," "lower," "downward," "bottom," and similar terms refer to a direction toward the earth's surface, but is meant for illustrative purposes only, and the terms are not meant to limit the disclosure.

Various specific embodiments, versions and examples are now be described, including exemplary embodiments and definitions that are adopted herein for purposes of understanding. While the following detailed description gives specific preferred embodiments, those skilled in the art will appreciate that these embodiments are exemplary only, and that the disclosure can be practiced in other ways. For purposes of determining infringement, the scope of the invention will refer to the any claims, including their equivalents, and elements or limitations that are equivalent to those that are recited.

Cast or blown unoriented polyethylene ("PE") or polypropylene ("PP") films are used as sealants in packaging or other applications, and may be combined with other webs, which are printed, like paper, poly(ethylene terephthalate) ("PET"), biaxially oriented PP ("BOPP"), metallized PET or BOPP, Nylon^{®} or aluminum foil in order to provide the film with rigidity and barrier protection.

Sealant webs, such as those just described, are often white-pigmented in order to provide a bright white base for printed colors thereon. Use of white-sealant webs saves on the high cost of printing white ink.

Solid particles or incompatible polymer(s) in a PP film may undergo orientation to provide cavitated BOPP films, and thereby provide a white opaque film with a lower density, *i.e.,* higher yield or more square meters per kilogram of film. The orientation process enhances cavitation. A drawback of cavitation, however, is impairment of seal strength.

Surprisingly, linear, low-density PE ("LLDPE") film may be cavitated during bi-orientation and produce a white-opaque film having a lower density. This was surprising due to the low crystallinity of the LLDPE resin. Furthermore, and contrary to cavitated BOPP films, is that packages may be produced that have high-seal strengths, potentially good hermeticity, and sealing that mitigates or prevents contamination through the seal.

The new, multilayered films provide heat-sealability and enhanced sealing properties (e.g., high seal -strengths, hermetic seals, seal-through-contamination) to packages and/or labels at reduced thicknesses. The customer benefits in having a reduced amount of packaging at same or better performances.

As used herein, "polymer" may be used to refer to homopolymers, copolymers, interpolymers, terpolymers, etc. Likewise, a "copolymer" may refer to a polymer comprising two monomers or to a polymer comprising three or more monomers.

As used herein, "intermediate" is defined as the position of one layer of a multilayered film wherein said layer lies between two other identified layers. In some embodiments, the intermediate layer may be in direct contact with either or both of the two identified layers. In other embodiments, additional layers may also be present between the intermediate layer and either or both of the two identified layers.

As used herein, "elastomer" is defined as a propylene-based or ethylene-based copolymer that can be extended or stretched with force to at least 100% of its original length, and upon removal of the force, rapidly (e.g., within 5 seconds) returns to its original dimensions.

As used herein, "plastomer" is defined as a propylene-based or ethylene-based copolymer having a density in the range of 0.850 g/cm³ to 0.920 g/cm³ and a DSC melting point of at least 40° C.

As used herein, "substantially free" is defined to mean that the referenced film layer is largely, but not wholly, absent a particular component. In some embodiments, small amounts of the component may be present within the referenced layer as a result of standard manufacturing methods, including recycling of film scraps and edge trim during processing.

### Core Layer

As is known to those skilled in the art, the core layer of a multilayered film is most commonly the thickest layer and provides the foundation of the multilayered structure. In the claimed invention, the core layer consists of linear, low-density polyethylene (LLDPE) and from 2 wt.% to 30 wt.% based on the total weight of the core layer of one or more cavitating agents. In some embodiments, the core layer consists essentially of LLDPE and is substantially free from other components. The claimed invention uses an LLDPE with a melting index of 1 to 3 g/10 min (measured at 190°C - 2.13 Kg conditions), a density of 0.915 to 0.930 g/cm³, and a melting peak of 115 to 135°C.

In described but unclaimed examples, the core layer may further include a hydrocarbon resin. Hydrocarbon resins may serve to enhance or modify the flexural modulus, improve processability, or improve the barrier properties of the film. The resin may be a low molecular weight hydrocarbon that is compatible with the core polymer. Optionally, the resin may be hydrogenated. The resin may have a number average molecular weight less than 5000, preferably less than 2000, most preferably in the range of from 500 to 1000. The resin can be natural or synthetic and may have a softening point in the range of from 60° C to 180° C.

Suitable hydrocarbon resins include, but are not limited to petroleum resins, terpene resins, styrene resins, and cyclopentadiene resins. In some described but unclaimed embodiments, the hydrocarbon resin is selected from the group consisting of aliphatic hydrocarbon resins, hydrogenated aliphatic hydrocarbon resins, aliphatic/aromatic hydrocarbon resins, hydrogenated aliphatic aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, polyterpene resins, terpene-phenol resins, rosins and rosin esters, hydrogenated rosins and rosin esters, and combinations thereof.

Hydrocarbon resins that may be suitable for use as described herein include EMPR 120, 104, 111, 106, 112, 115, EMFR 100 and 100A, ECR-373 and ESCOREZ^{®} 2101, 2203, 2520, 5380, 5600, 5618, 5690 (commercially available from ExxonMobil Chemical Company of Baytown, Tex.), ARKON^{™} M90, M100, M115 and MBS and SUPER ESTER^{™} rosin esters (commercially available from Arakawa Chemical Company of Japan); SYLVARES^{™} phenol modified styrene, methyl styrene resins, styrenated terpene resins, ZONATAC^{™} terpene-aromatic resins, and terpene phenolic resins (commercially available from Arizona Chemical Company of Jacksonville, Fla.); SYLVATAC^{™} and SYLVALITE^{™} rosin esters (commercially available from Arizona Chemical Company of Jacksonville, Fla.); NORSOLENE^{™} aliphatic aromatic resins (commercially available from Cray Valley of France); DERTOPHENE^{™} terpene phenolic resins (commercially available from DRT Chemical Company of Landes, France); EASTOTAC^{™} resins, PICCOTAC^{™} C5/C9 resins, REGALITE^{™} and REGALREZ^{™} aromatic and REGALITE^{™} cycloaliphatic/aromatic resins (commercially available from Eastman Chemical Company of Kingsport, Tenn.); WENGTACK^{™} ET and EXTRA^{™} (commercially available from Sartomer of Exton, Pa.), FORALTM, PENTALYNTM, and PERMALYNTM rosins and rosin esters (commercially available from Hercules, now Eastman Chemical Company of Kingsport, Tenn.); QUINTONE^{™} acid modified C5 resins, C5/C9 resins, and acid modified C5/C9 resins (commercially available from Nippon Zeon of Japan); and LX^{™} mixed aromatic/cycloaliphatic resins (commercially available from Neville Chemical Company of Pittsburgh, Pa.); CLEARON^{™} hydrogenated terpene aromatic resins (commercially available from Yasuhara of Japan), and PICCOLYTE^{™} (commercially available from Loos & Dilworth, Inc. of Bristol, Pa.). Other suitable hydrocarbon resins may be found in U.S. Pat. No. 5,667,902. The preceding examples are illustrative only and by no means limiting.

In such unclaimed examples, the amount of such hydrocarbon resins, either alone or in combination, in the core layer is preferably less than 20 wt %, more preferably in the range of from 1 wt % to 5 wt %, based on the total weight of the core layer.

In described but unclaimed examples, the core layer may further comprise one or more additives such as opacifying agents, pigments, colorants, slip agents, antioxidants, anti-fog agents, antistatic agents, fillers, moisture barrier additives, gas barrier additives, and combinations thereof, as discussed in further detail below. A suitable anti-static agent is ARMOSTAT^{™} 475 (commercially available from Akzo Nobel of Chicago, 111.).

In the claimed invention, the core layer consists of LLDPE and from 2 wt.% to 30 wt.% based on the total weight of the core layer of one or more cavitating agents. Cavitating agents may be present in the core layer in an amount that is less than 30 wt %, preferably less than 20 wt %, most preferably in the range of from 2 wt % to 10 wt %, based on the total weight of the core layer.

The core layer preferably has a thickness in the range of from about 5 µm to 100 µm, more preferably from about 5 µm to 50 µm, most preferably from 5 µm to 25 µm.

### Tie Layer(s) - unclaimed examples

Tie layer(s) of a multi layered film are typically used to connect two other layers of the multilayered film structure, e.g., a core layer and a sealant layer, and are positioned intermediate these other layers. The tie layer(s) may have the same or a different composition as compared to the core layer.

In some described but unclaimed examples, a tie layer is in direct contact with the surface of the core layer. In other described but unclaimed examples, another layer or layers may be intermediate the core layer and a tie layer. The tie layer may comprise one or more polymers. In addition, the polymers may include C₂ polymers, C₃ polymers, C₂C₃ random copolymers, C₂C₃C₄ random terpolymers, heterophasic random copolymers, C₄ homopolymers, C₄ copolymers, metallocene polymers, propylene-based or ethylene-based elastomers and/or plastomers, or combinations thereof. For example, one polymer may be a grade of VISTAMAXX^{™} polymer (commercially available from ExxonMobil Chemical Company of Baytown, Tex.), such as VM6100 and VM3000 grades. Alternatively, suitable polymers may include VERSIFY^{™} polymer (commercially available from The Dow Chemical Company of Midland, Mich.), Basell CATALLOY^{™} resins such as ADFLEX^{™} T100F, SOFTELL^{™} Q020F, CLYRELL^{™} SM1340 (commercially available from Basell Polyolefins of The Netherlands), PB (propylene-butene-1) random copolymers, such as Basell PB 8340 (commercially available from Basell Polyolefins of The Netherlands), Borealis BORSOFT^{™} SD233CF, (commercially available from Borealis of Denmark), EXCEED^{™} 1012CA and 1018CA metallocene polyethylenes, EXACT^{™} 5361, 4049, 5371, 8201 , 4150, 3132 polyethylene plastomers, EMCC 3022.32 low density polyethylene (LDPE) (commercially available from ExxonMobil Chemical Company of Baytown, Tex.).

The tie layer may further comprise one or more additives such as opacifying agents, pigments, colorants, cavitating agents, slip agents, antioxidants, anti-fog agents, anti-static agents, anti-block agents, fillers, moisture barrier additives, gas barrier additives, and combinations thereof, as discussed in further detail below.

The thickness of the tie layer is typically in the range of from about 0.50 to 25 µm, preferably from about 0.50 µm to 12 µm, more preferably from about 0.50 µm to 6 µm, and most preferably from about 2.5 µm to 5 µm. However, in some thinner films, the tie layer thickness may be from about 0.5 µm to 4 µm, or from about 0.5 µm to 2 µm, or from about 0.5 µm to 1.5 µm.

### Skin layers

A skin layer is provided on the outer surface(s) of the core layer. Skin layer(s) may be provided to improve the film's barrier properties, processability, printability, and/or compatibility for metallization, coating, and lamination to other films or substrates.

In some unclaimed examples, the skin layer comprises at least one polymer selected from the group consisting of a polyethylene polymer or copolymer, a polypropylene polymer or copolymer, an ethylene-propylene copolymer, an ethylene-propylene-butene ("EPB") terpolymer, a propylene-butene copolymer, an ethylene-vinyl alcohol polymer, and combinations thereof.

In the claimed invention, there is a first skin layer, consisting of LLDPE and optionally additives, that is located on the first side of the core layer; and a second skin layer, consisting of LLDPE and optionally additives, that is located on the second side of the core layer. The skin layer consisting of LLDPE may, for example, be Exceed^{™} resin from ExxonMobil Chemicals or Evolue^{™} resin from Prime Polymer or Elite^{™} resin from Dow.

For coating and printing functions, the skin layer may preferably be surface-treated. For metallizing or barrier properties, the skin layer may contain LLDPE or ethylene vinyl alcohol based polymer(s) ("EVOH"). Suitable EVOH copolymer is EVAL^{™} G176B or XEP 1300 (commercially available from Kuraray Company Ltd. of Japan). As noted above, in the claimed invention, each of the first and second skin layers consist of LLDPE and optionally additives.

The skin layer may also comprise processing aid additives, such as anti-block agents, anti-static agents, slip agents and combinations thereof, as discussed in further detail below.

The thickness of the skin layer depends upon the intended function of the skin layer, but is typically in the range of from about 0.50 µm to 3.5 µm, preferably from about 0.50 µm to 2 µm, and in many embodiments most preferably from about 0.50 µm to 1.5 µm. Also, in thinner film embodiments, the skin layer thickness may range from about 0.50 µm to 1.0 µm, or 0.50 µm to 0.75 µm.

### Coating - unclaimed examples

In some described but unclaimed examples, one or more coatings, such as for barrier, printing and/or processing, may be applied to outer surface(s) of the multilayered films. For instance, the coating(s) may be directly on the outer surfaces (*i.e.,* those surfaces facing away from the core) of tie layers, on either or both sides of the core layer, or elsewhere. Such coatings may include acrylic polymers, such as ethylene acrylic acid (EAA), ethylene methyl acrylate copolymers (EMA), polyvinylidene chloride (PVdC), poly(vinyl)alcohol (PVOH) and EVOH. The coatings may be applied by an emulsion or solution coating technique or by co- extrusion and/or lamination.

The PVdC coatings that may be suitable for use with the multilayered films are any of the known PVdC compositions heretofore employed as coatings in film manufacturing operations, e.g., any of the PVdC materials described in U.S. Pat, No. 4,214,039, U.S. Pat. No. 4,447,494, U.S. Pat. No. 4,961,992, U.S. Pat. No. 5,019,447, and U.S. Pat. No. 5,057, 177.

Known vinyl alcohol-based coatings, such as PVOH and EVOH, that are suitable for use with the multilayered films include VINOL^{™} 125 or VINOL^{™} 325 (both commercially available from Air Products, Inc. of Allentown, Pa.). Other PVOH coatings are described in U.S. Pat. No. 5,230,963.

Before applying the coating composition to the appropriate substrate, the outer surface(s) of the film may be treated as noted herein to increase its surface energy. This treatment can be accomplished by employing known techniques, such as flame treatment, plasma, corona discharge, film chlorination, *e.g.,* exposure of the film surface to gaseous chlorine, treatment with oxidizing agents such as chromic acid, hot air or steam treatment, flame treatment and the like. Although any of these techniques is effectively employed to pre-treat the film surface, a frequently preferred method is corona discharge, an electronic treatment method that includes exposing the film surface to a high voltage corona discharge while passing the film between a pair of spaced electrodes. After treatment of the film surface, the coating composition is then applied thereto.

Coating compositions may be applied to the film as a water-based solution. The coating composition may be applied to the treated surface in any convenient manner, such as by gravure coating, roll coating, dipping, spraying, and the like. The excess aqueous solution can be removed by squeeze rolls, doctor knives, and the like.

### Additives

Additives that may be present in one or more layers of the multilayered films, include, but are not limited to, opacifying agents, pigments, colorants, cavitating agents, slip agents, antioxidants, anti-fog agents, anti-static agents, anti-block agents, fillers, moisture barrier additives, gas barrier additives and combinations thereof. Such additives may be used in effective amounts, which vary depending upon the property required. Additives such as oxygen scavenger or gas scavenger can be added in any layer.

Examples of suitable opacifying agents, pigments or colorants are iron oxide, carbon black, aluminum, titanium dioxide (TiO₂), calcium carbonate (CaCO₃), polvbutvlene terephthalate (PBT), talc, beta nucleating agents, and combinations thereof.

Cavitating or void-initiating additives may include any suitable organic or inorganic material that is incompatible with the polymer material(s) of the layer(s) to which it is added, at the temperature of biaxial orientation, in order to create an opaque film. Examples of suitable void-initiating particles are PBT, nylon, solid or hollow pre-formed glass spheres, metal beads or spheres, ceramic spheres, calcium carbonate, talc, chalk, or combinations thereof. The average diameter of the void-initiating particles typically may be from about 0.1 to 10 µm.

Slip agents may include higher aliphatic acid amides, higher aliphatic acid esters, waxes, silicone oils, and metal soaps. Such slip agents may be used in amounts ranging from 0.1 wt % to 2 wt % based on the total weight of the layer to which it is added. An example of a slip additive that may be useful is high molecular PDSM (poly dimethyl siloxane) silicone gum.

Non-migratory slip agents, used in one or more skin layers of the multilayered films, may include polymethyl methacrylate (PMMA). The non-migratory slip agent may have a mean particle size in the range of from about 0.5 µm to 8 µm, or 1 µm to 5 µm, or 2 µm to 4 µm, depending upon layer thickness and desired slip properties. Alternatively, the size of the particles in the non-migratory slip agent, such as PMMA, may be greater than 20% of the thickness of the skin layer containing the slip agent, or greater than 40% of the thickness of the skin layer, or greater than 50% of the thickness of the skin layer. The size of the particles of such non-migratory slip agent may also be at least 10% greater than the thickness of the skin layer, or at least 20% greater than the thickness of the skin layer, or at least 40% greater than the thickness of the skin layer. Generally spherical, particulate non- migratory slip agents are contemplated, including PMMA resins, such as EPOSTAR^{™} (commercially available from Nippon Shokubai Co., Ltd. of Japan). Other commercial sources of suitable materials are also known to exist. Non-migratory means that these particulates do not generally change location throughout the layers of the film in the manner of the migrator slip agents, A conventional polydialkyl siloxane, such as silicone oil or gum additive having a viscosity of 10,000 to 2,000,000 centistokes is also contemplated.

Suitable anti-oxidants may include phenolic anti-oxidants, such as IRGANOX^{®} 1010 (commercially available from Ciba-Geigy Company of Switzerland). Such an antioxidant is generally used in amounts ranging from 0.1 wt % to 2 wt %, based on the total weight of the layer(s) to which it is added.

Anti-static agents may include alkali metal sulfonates, polyether-modified polydiorganosiloxanes, polyalkylphenylsiloxanes, and tertiary amines. Such anti-static agents may be used in amounts ranging from about 0.05 wt % to 3 wt %, based upon the total weight of the layer(s).

Examples of suitable anti -blocking agents may include silica-based products such as SYLOBLOC^{®} 44 (commercially available from Grace Davison Products of Colombia, Md.), PMMA particles such as EPOSTAR^{™} (commercially available from Nippon Shokubai Co., Ltd. of Japan), or polysiloxanes such as TOSPEARL^{™} (commercially available from GE Bayer Silicones of Wilton, Conn.). Such an anti-blocking agent comprises an effective amount up to about 3000 ppm of the weight of the layer(s) to which it is added.

Useful fillers may include finely divided inorganic solid materials such as silica, fumed silica, diatomaceous earth, calcium carbonate, calcium silicate, aluminum silicate, kaolin, talc, bentonite, clay and pulp.

Suitable moisture and gas barrier additives may include effective amounts of low-molecular weight resins, hydrocarbon resins, particularly petroleum resins, styrene resins, cyclopentadiene resins, and terpene resins.

Optionally, one or more skin layers may be coated with a wax-containing coating, for lubricity, in amounts ranging from 2 wt % to 15 wt % based on the total weight of the skin layer. Any conventional wax, such as, but not limited to Camauba^{™} wax (commercially available from Michelman Corporation of Cincinnati, Ohio) that is useful in thermoplastic films is contemplated.

### Orientation

The embodiments include possible uniaxial or biaxial orientation of the multilayered films. Orientation in the direction of extrusion is known as machine direction (MD) orientation. Orientation perpendicular to the direction of extrusion is known as transverse direction (TD) orientation. Orientation may be accomplished by stretching or pulling a film first in the MD followed by TD orientation. Blown films or cast films may also be oriented by a tenter-frame orientation subsequent to the film extrusion process, again in one or both directions. Orientation may be sequential or simultaneous, depending upon the desired film features. Preferred orientation ratios are commonly from between about three to about six times the extruded width in the machine direction and between about four to about ten times the extruded width in the transverse direction. Typical commercial orientation processes are BOPP tenter process, blown film, and LISIM technology.

### Surface Treatment

One or both of the outer surfaces of the multilayered films, and, in particular, the sealant layers, may be surface-treated to increase the surface energy to render the film receptive to metallization, coatings, printing inks, and/or lamination. The surface treatment can be carried out according to one of the methods known in the art including corona discharge, flame, plasma, chemical treatment, or treatment by means of a polarized flame.

### Metallization

Outer surface(s) (*i.e.,* the side facing away from the core) of the multilayered films may be metallized. For example, outer surfaces of the sealant layers and/or skin layers may undergo metallization after optionally being treated. Metallization may be carried out through conventional methods, such as vacuum metallization by deposition of a metal layer such as aluminum, copper, silver, chromium, or mixtures thereof.

### Priming

A primer coating may be applied to any surface of the multilayered films, hi this case, the film may be first treated by one of the foregoing methods to provide increased active adhesive sites thereon and to the thus-treated film surface there may be subsequently applied a continuous coating of a primer material. Such primer materials are well known in the art and include, for example, epoxy and poly(ethylene imine) (PEI) materials. U.S. Pat. No. 3,753,769, U.S. Pat. No. 4,058,645 and U.S. Pat. No. 4,439,493 disclose the use and application of such primers. The primer provides an overall adhesively active surface for thorough and secure bonding with the subsequently- applied coating composition and can be applied to the film by conventional solution coating means, for example, by roller application.

The films herein are also characterized in certain embodiments as being biaxially oriented, such as by the procedure described in U.S. Pat. No. 8,080,294. The films may be made by any suitable technique known in the art, such as a tenter process, double bubble process, LISIM^{™}, or others. Further, the working conditions, temperature settings, lines speeds, will vary depending on the type and the size of the equipment used. Nonetheless, described generally here is one method of making the films described throughout this disclosure. In one particular embodiment, the films are formed and biaxially oriented using the "tentered" method. In the tenter process, sheets/films of the various materials are melt-blended and coextruded, such as through a 3, 4, 5, 7-layer die head, into the desired film structure. Extruders may be used to melt-blend the molten layer materials, the melt streams then metered to the die. The extruded sheet is then cooled using air, water, or both.

Downstream of the first cooling step in this example embodiment of the tentered process, the unoriented sheet is re-heated to a temperature of from 60 to 100 or 120 or 150° C by any suitable means, such as heated S-wrap rolls, and then passed between closely spaced differential speed rolls to achieve machine-direction orientation. It is understood by those skilled in the art that this temperature range may vary depending upon the equipment, and, in particular, upon the identity and composition of the components constituting the film. Ideally, the temperature will be below that which will melt the film, or cause it to become tacky and adhere to the equipment, but high enough to facilitate the machine-direction orientation process. Notably, such temperatures referred to herein refer to the film temperature, itself. The film temperature may be measured by using, for example, infrared spectroscopy, the source being aimed at the film as it is being processed; those skilled in the art will understand that measuring the actual film temperature may not be precise and/or fully accurate. In this case, those skilled in the art may estimate the temperature of the film by knowing the temperature of the air or roller immediately adjacent to the film that is measured by any suitable means. The heating means for the film line may be set at any appropriate level of heating, depending upon the instrument, to achieve the stated or desired film temperatures.

Subsequently, the lengthened and thinned film is cooled and passed to the tenter section of the line for TD orientation. At this point, the edges of the sheet are grasped by mechanical clips on continuous chains and pulled into a long, precisely controlled, hot-air oven for a pre-heating step. The film temperatures may range from 80 or 1 10 to 150 or 160° C in the pre-heating step. Again, the temperature is ideally below that which will melt the film, but high enough to facilitate the step of transverse-direction orientation. Next, the edges of the sheet are grasped by mechanical clips on continuous chains and pulled into a long, precisely controlled, hot-air oven for transverse stretching. The tenter chains diverge a desired amount to stretch the film in the transverse direction at a temperature high enough to facilitate the step of transverse-direction orientation but low enough so as not to melt the film. After stretching to the required transverse orientation, the film is then cooled from 5 to 10 or 15 or 20 or 30 or 40° C below the stretching temperature, and the mechanical clips are released prior to any edge trimming. Thereafter, optional corona or any other treatment may take place followed by winding.

Thus, in certain embodiments the film(s) described herein are biaxially oriented with at least a 5 or 6 or 7 or 8-fold TD orientation and at least a 2 or 3 or 4-fold MD orientation.

In various embodiments, cavitation and/or opacity-inducing agents are substantially absent, meaning that they are not present in the core in any detectable amount. Examples of cavitation and/or opacity-inducing agents includes calcium carbonate, talc, carbon black, clay, untreated silica and alumina, zinc oxide, mica, asbestos, barites, magnesium carbonate and mixtures thereof, as well as those materials made from polybutylene terephthalate, nylon-6, cyclic olefin copolymers particles, and other particles that are phase-distinct from the core layer material, and having a size that, during orientation, will create cavities in the core layer.

### INDUSTRIAL APPLICABILITY

The disclosed multilayered films may be used as stand-alone films, laminates, or webs. Or, the multilayered films may be sealed, coated, metallized, and/or laminated to other film structures. The disclosed multilayered films may be prepared by any suitable methods comprising the steps of co-extruding a multilayered film according to the description and claims of this specification, orienting and preparing the film for intended use such as by coating, printing, slitting, or other converting methods.

For some applications, it may be desirable to laminate the multilayered films to other polymeric film or paper products for purposes such as package decor including printing and metallizing. These activities are typically performed by the ultimate end-users or film converters who process films for supply to the ultimate end-users.

The prepared multilayered film may be used as a flexible packaging film to package an article or good, such as a food item or other product. In some applications, the film may be formed into a pouch type of package, such as may be useful for packaging a beverage, liquid, granular, or dry-powder product. The prepared multilayered films may be used also in labeling applications, in agricultural or horticultural applications, or a myriad of other applications.

### EXPERIMENTAL (examples are not according to the present invention)

As non-limiting examples, two biaxially oriented LLDPE films were made on semi-works line(s), wherein Table 1 is for a clear/transparent, non-cavitated structure and Table 2 is for a cavitated structure.

**TABLE 1**

| | **Clear Bi-Oriented LLDPE** | |
|---|---|---|
| **Layer** | **Composition** | **Thickness** |
| **Skin layer** | metallocene LLDPE¹ + 1000 ppm zeolite (5 µm) | **1 µm** |
| **Core layer** | metallocene LLDPE¹ | **23 µm** |
| **Skin layer** | metallocene LLDPE² + 1000 ppm zeolite (5 µm) | **1 µm** |

| | | |
|---|---|---|
| ¹ - *e.g.,* type of LLDPE: MI = 1.9, p = 0.927 g/cm³, Tm = 127°C (a mLLDPE) ² - *e.g.,* type of LLDPE: MI = 3.8, p = 0.913 g/cm³, Tm = 113°C (a mLLDPE) | | |

**TA RI.F 2**

| | **Cavitated Bi-Oriented LLDPE** | |
|---|---|---|
| **Layer** | **Composition** | **Thickness** |
| **Skin layer** | metallocene LLDPE¹ + 1000 ppm zeolite (5 µm) | **1 µm** |
| **Tie layer** | metallocene LLDPE¹ | **5 µm** |
| **Core layer** | 80 wt% metallocene LLDPE¹ + 20% (70 wt% CaCO₃ in HDPE)³ | **13 µm** |
| **Tie layer** | metallocene LLDPE¹ | **5 µm** |
| **Skin layer** | metallocene LLDPE² + 1000 ppm zeolite (5 µm) | **1 µm** |

| | | |
|---|---|---|
| ¹ - e.g., type of mLLDPE: MI = 1.9, p = 0.927 g/cm³, Tm = 127°C (a mLLDPE) ² - e.g., type of mLLDPE: MI = 3.8, p = 0.913 g/cm³, Tm = 113°C (a mLLDPE) ³- e.g., Schulman Polybatch FCC 7310 HD | | |

The following properties were measured for the clear and cavitated films of Tables 1 and 2 and are reported below in Table 3.

**TABLE 3**

| | **Clear Bi-Oriented LLDPE** | **Cavitated Bi-Oriented LLDPE** |
|---|---|---|
| **yield** | 39.0 m²/kg | 36.6 m²/kg |
| **optical gauge (ASTM D6988-08)** | 26.5 µm | 36.5 µm |
| **density (calculated)** | 0.949 g/cm³ | 0.748 g/cm³ |
| **haze (ASTM D1003)** | 4.5% | --- |
| **light transmission (ASTM D1003)** | --- | 46.5% |

Accordingly, the data indicates that LLDPE bi-oriented films may be cavitated using CaCO₃ particles as a cavitating agent in order to produce a white-opaque film, which has a lower density than the same LLDPE film in a non-cavitated state, and provides a barrier to light.

Turning now to Table 4, reported are sealing properties of the films from Tables 1 and 2. Using standard testing method of ASTM F2029, an Otto Brugger sealer with crimp jaws was used at a pressure of 41 N/cm2 and a dwell time of 0,75 sec over a range of temperatures from 80 °C to 150 °C on the laminates. The data indicates that cavitated bi- oriented LLDPE, films maintain high seal -strengths, whereas bi-oriented cavitated PP films produce weak seals due to weak adhesion of the sealant skin on the cavitated core as explained, for example, in U.S. Pat, No, 8,815,377. Equivalent cavitated BOPP samples would yield seal strengths below 1000 g/inch, which is equivalent to 400 g cm according to significant figures. The g inch measurements reported in Figure 2 are converted to and reported in g/cm according to the number of significant figures in the corresponding g/inch measurement.

**TABLE 4**

| **Jaw Temperature** | **Table 1 Film g/inch** | **Table 1 Film g/cm** | **Table 2 Film g/inch** | **Table 2 Film g/cm** |
|---|---|---|---|---|
| **80 °C** | 650 | 260 | 25 | 9.8 |
| **90 °C** | 830 | 330 | 155 | 61.0 |
| **100 °C** | 1095 | 431.1 | 1225 | 482.3 |
| **110 °C** | 1020 | 402 | 810 | 320 |
| **120 °C** | 1310 | 516 | 1040 | 409 |
| **130 °C:** | 5715 | 2250 | 4120 | 1620 |
| **140 °C** | 7020 | 2760 | 3870 | 1520 |
| **150 °C** | 6615 | 2604 | 3795 | 1494 |

In view of the foregoing, various bags, packages, pouches (e.g., stand-up, vertical fill-and-seal, horizontal fill-and-seal, etc.), films, laminates, and other structures may be formed from the above-described films, wherein such may have products (e.g., food, beverages) of any phase that require seals having requisite integrity and/or barriers to water, oxygen, or other contaminants.

## Claims

1. A biaxially oriented, multilayered film consisting of:
a core layer consisting of linear, low-density polyethylene (LLDPE) and from 2 wt.% to 30 wt.% based on the total weight of the core layer of one or more cavitating agents, wherein the core layer has a first side and a second side, wherein the first side is on an opposite side of the core layer as compared to the second side;
a first skin layer, consisting of LLDPE and optionally additives, that is located on the first side;
a second skin layer, consisting of LLDPE and optionally additives, that is located on the second side,
wherein the LLDPE in the core layer has a melting index of 1 to 3 g/10 min (measured at 190°C - 2.13 Kg conditions), a density of 0.915 to 0.930 g/cm³, and a melting peak of 115 to 135°C,
wherein the biaxially oriented, multilayered film is white-opaque and has a sealing strength of at least 400 g/cm at 100°C under a pressure of 41 N/cm² at a dwell time of 0.75 s, measured in accordance with ASTM F2029.

2. The biaxially oriented, multilayered film of claim 1, wherein the LLDPE in the first skin layer is of higher density than the LLDPE in the second skin layer.

3. The biaxially oriented, multilayered film of claim 1, wherein the one or more cavitating agents present in the core layer comprise CaCO₃.

4. The biaxially oriented, multilayered film of claim 1, wherein the core layer comprises at least 80 wt.% of the LLDPE.

5. The biaxially oriented, multilayered film of claim 1, further comprising metallization layer(s), primer(s), coating(s), printing ink(s), a lamination layer or combinations thereof.

6. The biaxially oriented, multilayered film of claim 1, further comprising surface treatment(s) to any layer of the biaxially oriented, multilayered film.

7. The biaxially oriented, multilayered film of claim 1, wherein the LLDPE comprises metallocene, linear, low-density polyethylene.

8. Use of the biaxially oriented, multilayered film of claim 1 in a packaging, tagging, bagging, or labeling application.

9. The biaxially oriented, multilayered film of claim 1 or claim 2, wherein the first skin layer or the second skin layer consists of LLDPE and anti-blocking additive.

10. The biaxially oriented, multilayered film of claim 1 or claim 2, wherein both the first skin layer and the second skin layer each consist of LLDPE and anti-blocking additive.

## Patentansprüche

1. Biaxial orientierter, mehrschichtiger Film, bestehend aus:
einer Kernschicht, bestehend aus linearem Polyethylen mit niedriger Dichte (LLDPE) und von 2 Gew.-% bis 30 Gew.-% basierend auf dem Gesamtgewicht der Kernschicht von einem oder mehreren Kavitationsmitteln, wobei die Kernschicht eine erste Seite und eine zweite Seite aufweist, wobei sich die erste Seite im Vergleich zu der zweiten Seite auf einer gegenüberliegenden Seite der Kernschicht befindet;
einer ersten Hautschicht, bestehend aus LLDPE und optional Additiven, die auf der ersten Seite liegt;
einer zweiten Hautschicht, bestehend aus LLDPE und optional Additiven, die auf der zweiten Seite liegt,
wobei das LLDPE in der Kernschicht einen Schmelzindex von 1 bis 3 g/10 min (gemessen bei Bedingungen von 190 °C - 2,13 kg), eine Dichte von 0,915 bis 0,930 g/cm³ und einen Schmelzpeak von 115 bis 135 °C aufweist,
wobei der biaxial orientierte, mehrschichtige Film weiß-opak ist und eine Siegelfestigkeit von mindestens 400 g/cm bei 100 °C unter einem Druck von 41 N/cm² bei einer Verweilzeit von 0,75 s, gemessen gemäß ASTM F2029, aufweist.

2. Biaxial orientierter, mehrschichtiger Film nach Anspruch 1, wobei das LLDPE in der ersten Hautschicht eine höhere Dichte aufweist als das LLDPE in der zweiten Hautschicht.

3. Biaxial orientierter, mehrschichtiger Film nach Anspruch 1, wobei das eine oder die mehreren Kavitationsmittel, die in der Kernschicht vorhanden sind, CaCO₃ umfassen.

4. Biaxial orientierter, mehrschichtiger Film nach Anspruch 1, wobei die Kernschicht mindestens 80 Gew.-% des LLDPE umfasst.

5. Biaxial orientierter, mehrschichtiger Film nach Anspruch 1, ferner umfassend (eine) Metallisierungsschicht(en), (einen) Primer, (eine) Beschichtung(en), (eine) Druckfarbe(n), eine Laminierungsschicht oder Kombinationen daraus.

6. Biaxial orientierter, mehrschichtiger Film nach Anspruch 1, ferner umfassend (eine) Oberflächenbehandlung(en) an einer beliebigen Schicht des biaxial orientierten, mehrschichtigen Films.

7. Biaxial orientierter, mehrschichtiger Film nach Anspruch 1, wobei das LLDPE lineares Metallocen-Polyethylen mit niedriger Dichte umfasst.

8. Verwendung des biaxial orientierten, mehrschichtigen Films nach Anspruch 1 in einer Verpackungs-, Etikettier-, Absack- oder Beschriftungsanwendung.

9. Biaxial orientierter, mehrschichtiger Film nach Anspruch 1 oder Anspruch 2, wobei die erste Hautschicht oder die zweite Hautschicht aus LLDPE und Antiblockadditiv besteht.

10. Biaxial orientierter, mehrschichtiger Film nach Anspruch 1 oder Anspruch 2, wobei sowohl die erste Hautschicht als auch die zweite Hautschicht jeweils aus LLDPE und Antiblockadditiv bestehen.

## Revendications

1. Film multicouche à orientation bi-axiale constitué de :
une couche centrale constituée de polyéthylène basse densité linéaire (LLDPE) et de 2 % en poids à 30 % en poids en fonction du poids total de la couche centrale d'un ou plusieurs éléments d'agents de cavitation, dans lequel la couche centrale a un premier côté et un second côté, dans lequel le premier côté est sur un côté opposé de la couche centrale par rapport au second côté ;
une première couche de peau, constituée de LLDPE et éventuellement d'additifs, qui est située sur le premier côté ;
une seconde couche de peau, constituée de LLDPE et éventuellement d'additifs, qui est située sur le second côté,
dans lequel le LLDPE dans la couche centrale a un indice de fusion de 1 à 3 g/10 min (mesuré à des conditions de 190 °C à 2,13 kg), une densité de 0,915 à 0,930 g/cm³, et un pic de fusion de 115 à 135 °C,
dans lequel le film multicouche à orientation bi-axiale est blanc opaque et a une force d'étanchéité d'au moins 400 g/cm à 100 °C sous une pression de 41 N/cm² à un temps de maintien de 0,75 s, mesurée conformément à ASTM F2029.

2. Film multicouche à orientation bi-axiale selon la revendication 1, dans lequel le LLDPE dans la première couche de peau est de densité plus élevée que le LLDPE dans la seconde couche de peau.

3. Film multicouche à orientation bi-axiale selon la revendication 1, dans lequel les un ou plusieurs éléments d'agents de cavitation présents dans la couche centrale comprennent du CaCO₃.

4. Film multicouche à orientation bi-axiale selon la revendication 1, dans lequel la couche centrale comprend au moins 80 % en poids du LLDPE.

5. Film multicouche à orientation bi-axiale selon la revendication 1, comprenant en outre un élément ou plusieurs couches de métallisation, un élément ou plusieurs apprêts, un élément ou plusieurs revêtements, un élément ou plusieurs encres d'impression, une couche de stratification ou des combinaisons de ceux-ci.

6. Film multicouche à orientation bi-axiale selon la revendication 1, comprenant en outre un ou plusieurs traitements de surface sur une couche quelconque du film multicouche à orientation bi-axiale.

7. Film multicouche à orientation bi-axiale selon la revendication 1, dans lequel le LLDPE comprend du polyéthylène métallocène, linéaire à basse densité.

8. Utilisation du film multicouche à orientation bi-axiale selon la revendication 1 dans une application d'emballage, d'étiquetage, d'ensachage ou de marquage.

9. Film multicouche à orientation bi-axiale selon la revendication 1 ou la revendication 2, dans lequel la première couche de peau ou la seconde couche de peau est constituée de LLDPE et d'additif antibloquant.

10. Film multicouche à orientation bi-axiale selon la revendication 1 ou la revendication 2, dans lequel à la fois la première couche de peau et la seconde couche de peau sont chacune constituées de LLDPE et d'additif antibloquant.
